# EUROPÄISCHE PATENTANMELDUNG

(11) **EP 4 335 827 A1**
(43) Veröffentlichungstag der Anmeldung: **13.03.2024**
(21) Anmeldenummer: 22195063.7
(22) Anmeldetag: 12.09.2022
(51) Int. Cl.: C02F 1/461, B01D 61/42, B01D 69/06, B01D 71/02, C01D 15/02, C02F 1/469, C22B 26/12, C25B 1/04, C25B 1/16, C25B 9/19, C25B 9/23, C25B 11/00, C02F 1/38, C02F 1/44, C02F 1/52, C02F 101/10, C02F 103/08, C02F 103/16

(54) **HERSTELLEN VON WASSERSTOFF UND FESTEM LITHIUMHYDROXID**

(71) Anmelder: Evonik Operations GmbH, 45128 Essen (DE)
(72) Erfinder: HYING, Christian, 46414 Rhede (DE); GORMAN, Elisabeth, 45721 Haltern am See (DE); STENNER, Patrik, 63452 Hanau (DE); JURETZKA, Sabrina, 60599 Frankfurt am Main (DE); STADTMÜLLER, Tobias, 63500 Seligenstadt (DE); ARNDT, Sebastian, 63452 Hanau (DE); LÖFFLER, Frank, 64646 Heppenheim (DE); KLINK-TRAN, Huong, 68163 Mannheim (DE); ANTONI, Jessica, 61130 Nidderau (DE); DECKER, Nicole, 44803 Bochum (DE); DAHLHUES, Meike, 45772 Marl (DE)
(74) Vertreter: Evonik Patent Association

(57) **Zusammenfassung**

Der Erfindung liegt die Aufgabe zu Grunde, ein Verfahren zur Herstellung von Lithiumhydroxid anzugeben, welches sehr energieeffizient ist. Das Verfahren soll insbesondere ohne den Verbrauch thermischer Energie auskommen. Als Rohstoff soll das Verfahren Li-haltige Wässer verarbeiten können, die beim Aufschließen von gebrauchten Lithium-Ionen-Batterien anfallen. Das durch das Verfahren hergestellte LiOH soll so eine hohe Reinheit haben, dass es direkt zur Fertigung von neuen LIB genutzt werden kann. Das Verfahren soll einen hohen Durchsatz erzielen und einen geringen Flächenverbrauch aufweisen, damit es sich mit bestehenden Prozessen zur Aufarbeitung von gebrauchten LIB bzw. zur Herstellung neuer LIB zu einem geschlossenen, kontinuierlichen Produktionskreislauf kombinieren lässt. Das erfindungsgemäße Verfahren ist ein elektrolytisches Membranverfahren, welches mit einer LiSICon Membran arbeitet. Ein besonderer Aspekt des Verfahrens ist darin zu sehen, dass die Elektrolyse bis zur Fällungsgrenze des Lithiumhydroxids betrieben wird.

## Beschreibung

Für die Herstellung von Lithiumionenbatterien (LIB) wird denknotwenig Lithium (Li) benötigt. Aufgrund seiner hohen Reaktivität kommt Lithium in der Natur nicht als Reinstoff, sondern stets gebunden vor. Als Ausgangstoff für die Herstellung von LIB wird das Lithium in der Regel in Form von Lithiumhydroxid (LiOH) oder von Lithiumcarbonat (Li₂CO₃) verwendet.

In den meisten natürlichen Lagerstätten ist Li in Form von Lithiumoxid (Li₂O) oder von Salzen wie Lithiumsulfat (Li₂SO₄) oder Lithiumchlorid (LiCI) vorhanden. Das Lithiumoxid ist Bestandteil von Erzen wie Pegmatit, wahrendessen Lithiumsulfat und Lithiumchlorid in den Laugen der Li-Salzseen gelöst sind. Im Zuge des bergmännischen Abbaus wird die jeweils gewonnene Lithiumverbindung in Lithiumcarbonat (Li₂CO₃) überführt. In einem weiteren Prozessschritt kann das Lithiumcarbonat mit Branntkalk oder Calciumhydroxid in Lithiumhydroxid umgesetzt werden. Die Gewinnung von Li und dessen Umwandung in LiOH ist beschrieben in:
Wietelmann, U. and Steinbild, M. (2014). Lithium and Lithium Compounds. In Ullmann's Encyclopedia of Industrial Chemistry, (Ed.). DOI: 10.1002/14356007.a15_393.pub2

Reiche Li-Lagerstätten sind bekannt, aber die Herstellung von LiOH aus den dort vorhandenen Li-Verbindungen ist sehr energieintensiv- und abwasserintensiv. Darüber hinaus besteht das strategisch begründete Bedürfnis, von den Eigentümern der Lagerstätte unabhängig zu sein.

Eine Lösung dieses Problems könnte darin bestehen, abgenutzte LIB stofflich aufzuarbeiten, sodass das darin enthaltene Lithium wieder als Rohstoff für Neubatterien verwendet werden kann.

Recyclingverfahren für LIB wurden in der Vergangenheit bereits zur technischen Reife entwickelt, jedoch meist mit dem Ziel auf die darin enthaltenen Metalle Fe, Ni, Mn, Co, Mg, Al. Das Alkalimetall Li wurde in der Regel nicht zurückgewonnen, weil es auf Grund seiner hohen Reaktivität nicht einfach aus dem Batterieschrott abzutrennen ist und es in ausreichender Menge kostengünstig aus natürlichen Lagerstätten verfügbar war. Die Gewinnung vom Li aus gebrauchten LIB erschien lange Zeit schlicht unwirtschaftlich.

Inzwischen ist der gesellschaftliche und wirtschaftliche Druck gestiegen, Lithium aus gebrauchten LIB zurückzugewinnen. Der Erfolg dieses Vorhabens setzt voraus, dass rezykliertes Li in einer für die Produzenten von LIB akzeptablen Qualität angeboten werden kann, sodass sich die Herstellungsprozesse für LIB aus Recycling-Li nicht von denen aus bergmännisch gewonnenen Frisch-Li unterscheiden. Die Batteriequalität darf selbstredend nicht leiden. Folglich muss rezykliertes Li, insbesondere in Form von LiOH, sehr anspruchsvolle Spezifikationen hinsichtlich Reinheit erfüllen. Darüber hinaus muss das Verfahren zur Rückgewinnung von Li aus Altbatterien möglichst energieeffizient sein. Ebenso sollte das Verfahren wenig Wasser verbrauchen.

Bekannte Verfahren zur Rückgewinnung von Lithium aus Altbatterien haben zusammengestellt:
Pankaj K. Choubey et al.: Advance review on the exploitation of the prominent energystorage element Lithium. Part II: From sea water and spent lithium ion batteries (LIBs), Minerals Engineering, Volume 110, 2017, Pages 104-121 DOI: 10.1016/j.mineng.-2017.04.008.

Eine Technologie, die im vorstehenden Übersichtsartikel lediglich beiläufig als "LISM" erwähnt wird, ist die Elektrolyse von Li-haltigen Wässern in Gegenwart von so genannten LiSICon-Membranen.

LiSICon steht für Lithium Super lonic Conductor. Es handelt sich dabei um eine Klasse aus anorganischem, (glas)keramischen Material, welches elektrisch isoliert, aber zugleich eine intrinsische Leitfähigkeit für Li-Ionen aufweist. Der Transportmechanismus für Li ist in der Kristallstruktur des Materials begründet. Die Li-Ionen werden - vereinfacht gesprochen - durch die Kristalle "durchgereicht". Kommerziell verfügbare LiSICon-Materialien sind unter anderem Lithium-Aluminium-Titanphosphat (LATP), Lithium-Aluminium-Titan-Siliciumphosphat (LATSP), Lithium-Aluminium-Germaniumphosphat (LAGP) und Lithium-Lanthan-Titanoxid (LLTO). Diese Materialien wurden ursprünglich als Festkörper-Elektrolyt für LIB entwickelt. Eine Übersicht zu den Transportmechanismen von LiSICon, deren Kristallstruktur und Herstellung bieten:
Palakkathodi Kammampata et al.: Cruising in ceramics-discovering new structures for all-solid-state batteries-fundamentals, materials, and performances. Ionics 24, 639-660 (2018) DOI: 10.1007/s11581-017-2372-7
Yedukondalu Meesala et al.: Recent Advancements in Li-Ion Conductors for All-Solid-State Li-Ion Batteries. ACS Energy Lett. 2017, 2, 12, 2734-2751DOI: 10.1021/acsenergylett.7b00849

Spezielle LiSICon Stöchiometrien werden beschrieben von:
Sofia Saffirio et al.Li1.4Al0.4Ge0.4Ti1.4(PO4)3 promising NASICON-structured glass-ceramic electrolyte for all-solid-state Li-based batteries: Unravelling the effect of diboron trioxide, Journal of the European Ceramic Society, Volume 42, Issue 3, 2022, Pages 1023-1032 DOI 10.1016/j.jeurceramsoc.2021.11.014.
Eongyu Yi et al. Materials that can replace liquid electrolytes in Li batteries: Superionic conductivities in Li1.7Al0.3Ti1.7Si0.4P2.6O12. Processing combustion synthesized nanopowders to free standing thin films. Journal of Power Sources, Volume 269, 2014, Pages 577-588, DOI 10.1016/j.jpowsour.2014.07.029.

Aufgrund ihrer selektiven Leitfähigkeit für Li-Ionen können LiSICon-Materialien als Membran zur Abtrennung von Li aus Li-haltigen Gemischen verwendet werden. Das Li muss in dem Gemisch in ionischer Form vorliegen, etwa als in Wasser gelöstes Li-Salz. Als treibende Kraft, um die Li-Ionen durch die LiSICon -Membran zu fördern, wird eine elektrische Spannung benötigt. Hierfür wird eine elektrochemische Zelle aufgebaut, die zwei Elektroden und eine LiSICon-Membran umfasst, welche die Zelle in zwei Kompartimente aufteilt. In jedem Kompartiment befindet sich eine Elektrode. Abhängig von der Polarität der im Kompartiment enthaltenen Elektrode werden die Kompartimente als anodisch oder kathodisch bezeichnet. An den Elektroden wird eine elektrische Spannung angelegt und das Li-haltige Wasser als Anolyt in das anionische Kompartiment eingefüllt. Das kathodische Kompartiment wird mit Wasser als Katholyt gefüllt. Die Membran reicht die Li-Kationen zu der Kathode durch. Das Wasser in dem kathodischen Kompartiment (Katholyt) wird daher mit Li angereichert, während das Wasser auf der anodischen Seite (Anolyt) um Li abgereichert wird. Ein solcher Vorgang wird Membranelektrolyse genannt.

Membranelektrolytische Verfahren zur Gewinnung von Lithium mit Hilfe von LiSICon Membranen sind bereits im Stand der Technik beschrieben.

So beschreiben Zhen Li et al. ein Verfahren, bei dem als Rohstoff das schwach Lithium-haltige Wasser des Roten Meeres verwendet wird:
Zhen Li et al.: Continuous electrical pumping membrane process for seawater lithium mining. Energy Environ. Sci., 2021, 14, 3152 DOI: 10.1039/d1ee00354b

Die Arbeitsgruppe um Zhen Li verwenden LLTO als Membran. Das abgetrennte Zielprodukt ist Lithiumphosphat (Li₃PO₄), was für die Produktion von Lithium-Eisen-Phosphat (LFP) Batterien in Betracht kommt. LIB mit einem anderen Kathodenmaterial wie beispielsweise Nickel-Mangan-Cobalt (NMC) oder Lithium-Mangan-Oxid (NMO) können damit nicht direkt hergestellt werden.

Mithilfe von Solarstrom, einer LAGP Membran und einer Kupferfolie wollen Yang et al. metallisches Lithium direkt aus Meerwasser gewinnen:
Sixie Yang et al.: Lithium Metal Extraction from Seawater. Joule, Volume 2, Issue 9, 2018, Pages 1648-1651, DOI 10.1016/j.joule.2018.07.006.

US 2016/0201163 A1 beschreibt die Abtrennung von Li Ionen aus einer Sole wie Meerwasser mit Hilfe von LiSICon Membranen. Als Membranmaterialien werden konkret Li₃N, Li₁₀GeP₂S₁₂ und LaₓLi_{y}TiO₂, Li_{1+x+y}Alₓ(Ti, Ge)₂₋ₓSi_{y}P_{3-y}O₁₂ vorgeschlagen. Zielprodukt ist Lithiumcarbonat (Li₂CO₃).

Auch die WO 2019055730 A1 beschäftigt sich mit der Abtrennung von Lithium mit Hilfe von LiSICon-Membranen. Konkret werden LLTO oder LAGP oder LATP genannt. Das LiSICon-Material kann auf eine Stützstruktur aufgetragen sein. Die chemische Natur der Stützstruktur wird nicht näher beschrieben. Ebenso wenig wird beschrieben, wie das Auftragen von LiSICon auf die Stützstruktur geschehen soll. Das abgetrennte Zielprodukt sind Li-Ionen.

Aus der US9222148B2 ist es bekannt, Lithium-Hydroxid durch Elektrolyse an einer LiSICon Membran abzutrennen und sodann Lithiumhydroxid-Hydrat auszufällen. Nachteil dieses Verfahrens ist, dass es einen energieintensiven Verdampfungsschritt erfordert, um das Lithiumhydroxid auszufällen.

Neben der Verwendung von keramischen LiSICon Membranen sind auch elektrolytische Verfahren zur Abtrennung von Lithium bekannt, die mit organischen lonenaustauschmembranen arbeiten.

So beschreibt die EP 3805428 A1die elektrolytische Herstellung von Lithiumhydroxid. Neben der Elektrolyse wird eine elektrochemische Umsetzung des Lithiums zu Lithiumhydroxid betrieben. Zur Gewinnung der notwendigen Edukte wird gleichzeitig Wasser elektrochemisch gespalten. Hierzu wird eine bipolare Dreikammerzelle mit einer lonenaustauschmembran verwendet. Es werden die kommerziellen lonenaustauschmebranen Asahi^{®} AVV, Nafion^{®} 902, Fumatech^{®} FAB, Fumatech^{®} FKB und Neosepta^{®} CMB verwendet. Die chemische Natur dieser Ionenaustauschmembranen ist in EP 3805428 A1 nicht offengelegt, aber es ist überwiegend wahrscheinlich, dass es sich dabei um organische Membranmaterialien handelt. Die Dreikammerzelle arbeitet im sauren Milieu. Als Feed wird Wasser enthaltend Li-Salze wie insbesondere Lithiumsulfat (Li₂SO₄) oder Lithiumchlorid (LiCI) eingesetzt.

Eine zweitstufige elektrodialytische / elektrolytische Herstellung von Lithiumhydroxid aus wässrigem Lithiumsulfat und/oder Lithiumbisulfat bei gleichzeitiger Wasserspaltung offenbart US 10036094 B2. In einer ersten Stufe wird eine elektrochemische Zelle mit zwei Kompartimenten eingesetzt, in der zweiten Stufe eine Dreikammerzelle. Die Zellen sind mit Ionenaustauschmembranen ausgestattet. Die chemische Zusammensetzung der Membranen ist nicht gegeben. Die folgenden kommerziellen Membranen werden erwähnt: Fumatech^{®} FAB, Astom^{®} ACM, Asahi^{®} MV, Nafion^{®} 324 oder Astom^{®} AHA.

Ein prinzipieller Nachteil von Polymermembranen ist ihre Wasserdurchlässigkeit. Dadurch wird der Anolyt mit Wasser aus dem Katholyt verdünnt. Dies erfordert eine anschließende Entwässerung des Zielprodukts, was wiederum thermische Energie verbraucht oder den Standort der Anlage auf sonnenreiche Regionen beschränkt.

Neben ihrer Wasserdurchlässigkeit ist ein prinzipieller Nachteil der organischen Ionenaustauschmembranen darin zu sehen, dass sie weniger ionenselektiv als anorganische LiSICon-Materialien sind: Sie lassen nicht nur Li⁺, sondern auch Na⁺ passieren, sodass die Stoffreinheit des Zielproduktes beeinträchtigt wird, sobald sich im Feed auch Natrium findet. Neben der Reinheit des Zielprodukts leidet dadurch auch die Stromeffizienz des Prozesses: Die wertvolle elektrische Energie wird bei der Elektrolyse mit nicht ionenselektiven Membranen auch dafür verbraucht, unerwünschtes Na⁺ in das zweite Kompartiment zu transportieren. Im zweiten Kompartiment angekommen wird das Na⁺ zudem über unbeabsichtigte elektrochemische Prozesse in unerwünschte Nebenprodukte umgesetzt. Bezogen auf die Ausbeute an dem Zielprodukt Li ist die Energieeffizienz des Prozesses eingeschränkt.

Schließlich sind organische Membranen empfindlich gegen die Anwesenheit von zweiwertigen Kationen wie bspw. Mg²⁺ und Ca²⁺ . Diese Kationen vergiften die Membran mit der Zeit, sodass die Betriebsdauer organischer Ionenaustauschmembranen eingeschränkt ist.

Eine bessere Ionenselektivität versprechen die (glas)keramischen LiSICon Materialien. Ein für die industrielle Praxis hochrelevantes Problem ist hier jedoch weiterhin die Stabilität der LiSICon Membran gegenüber Verunreinigungen. So enthalten die Li+ -haltigen Wässer, die bei der Aufarbeitung von gebrauchten LIB entstehen, weitere Kationen wie insbesondere Na⁺ und K⁺, welche das LiSICon-Material nachhaltig schädigen: Diese Kationen besetzen offenbar dauerhaft die Fehlstellen in der Kristallstruktur, sodass ein Transport der Li+-Kationen durch die Membran kaum mehr möglich ist. Die Betriebsdauer der elektrochemischen Zelle ist dann abgelaufen. Weil LiSICon-Material sehr teuer ist, ist das Recycling von Li aus LIB bei kurzer Lebensdauer der Membran unwirtschaftlich. Auch die Sole der Li-Salzseen enthält von Natur aus viel Natrium und kann daher nicht auf bekannte LiSICon-Membranen losgelassen werden. Daher wird Lithium aus Salzseen weiterhin energieintensiv thermisch abgetrennt und/oder unter großem Wassereinsatz schrittweise gelöst und wieder auskristallisiert. Zwar wird dabei das Wasser mit Sonnenstrahlung verdunstet; jedoch ist das Wasser zum Lösen von LiCI in den Wüsten Südamerikas rar. So führt dieser Weg dort zu großen Problemen.

Ein weiteres praktisches Problem ist der hohe spezifische elektrische Widerstand des LiSICon-Materials. Dadurch erhält die elektrochemische Zelle einen hohen O_{HM}'schen Innenwiderstand, sodass das Verfahren einen entsprechend großen elektrischen Energiebedarf hat. Um den zu senken, kann die Membran theoretisch verdünnt werden. Jedoch erreicht sie dann aufgrund ihrer geringen Materialstärke in aggressiven Umgebungen wiederum nur eine geringe Standzeit.

In Hinblick auf diesen Stand der Technik besteht die Aufgabe der Erfindung darin, ein Verfahren zur Herstellung von Lithiumhydroxid anzugeben, welches sehr energieeffizient ist. Das Verfahren soll insbesondere ohne den Verbrauch thermischer Energie auskommen. Als Rohstoff soll das Verfahren Li-haltige Wässer verarbeiten können, die beim Aufschließen von gebrauchten Lithium-Ionen-Batterien anfallen. Das durch das Verfahren hergestellte LiOH soll so eine hohe Reinheit haben, dass es direkt zur Fertigung von neuen LIB genutzt werden kann. Das Verfahren soll einen hohen Durchsatz erzielen und einen geringen Flächenverbrauch aufweisen, damit es sich mit bestehenden Prozessen zur Aufarbeitung von gebrauchten LIB bzw. zur Herstellung neuer LIB zu einem geschlossenen, kontinuierlichen Produktionskreislauf kombinieren lässt. Schließlich soll das Verfahren möglichst wenig Frischwasser benötigen und wenig Abwasser verursachen.

Gelöst wird diese Aufgabe durch ein Verfahren nach Anspruch 1.

Gegenstand der Erfindung ist daher ein Verfahren zur Herstellung von Wasserstoff und Lithiumhydroxid mit den folgenden Schritten:
a) Bereitstellen eines Feeds enthaltend zumindest Wasser, Li-Ionen, sowie Verunreinigungen, wobei die Konzentration von Li-Ionen in dem Feed *C*_{F} mindestens 200 Gew.-ppm oder zwischen 500 Gew.-ppm und 140000 Gew.-ppm beträgt, jeweils bezogen auf das Gesamtgewicht des Feeds;
b) Bereitstellen eines armen Arbeitsmediums enthaltend Wasser und darin gelöst Lithiumhydroxid, wobei die Konzentration von Lithiumhydroxid in dem armen Arbeitsmedium *C*_{M0} bezogen auf das Gesamtgewicht des armen Arbeitsmediums mindestens 50 Gew.-ppm beträgt;
c) Bereitstellen von mindestens einer elektrochemischen Zelle, wobei die elektrochemische Zelle die folgenden Merkmale aufweist:
   i) die elektrochemische Zelle umfasst ein erstes Kompartiment, in dem eine Anode angeordnet ist;
   ii) die elektrochemische Zelle umfasst ein zweites Kompartiment, in dem eine Kathode angeordnet ist;
   iii) die elektrochemische Zelle umfasst eine Membran, welche das erste Kompartiment von dem zweiten Kompartiment trennt, wobei die Membran die Fläche A aufweist;
   iv) die Membran enthält ein anorganisches Material, welches eine Leitfähigkeit für Li-Ionen besitzt und welches elektrisch isolierend ist;
d) Bereitstellen von mindestens einer elektrischen Spannungsquelle, welche über eine erste elektrische Leitung mit der Anode und über eine zweite elektrische Leitung mit der Kathode verbunden ist;
e) Beaufschlagen des ersten Kompartiments mit dem Feed;
f) Beaufschlagen des zweiten Kompartiments mit dem armen Arbeitsmedium;
g) Beaufschlagen der elektrochemischen Zelle mit einer von der elektrischen Spannungsquelle bezogenen elektrischen Spannung U, dergestalt, dass ein elektrischer Strom / zwischen Anode und Kathode fließt, wobei der Quotient Q aus der Stromstärke des elektrischen Stroms / und der Fläche A der Membran zwischen 100 A/m² und 500 A/m² oder zwischen 150 A/m² und 350 A/m² beträgt;
h) Abziehen von Abwasser enthaltend zumindest Wasser, darin gelöste Li-Salze, Sauerstoff, sowie Verunreinigungen aus dem ersten Kompartiment, wobei die Konzentration von Li-Ionen in dem Abwasser Cw bezogen auf das Gesamtgewicht des Abwassers geringer ist als die Konzentration von Li-Ionen im Feed *C*_{F} bezogen auf das Gesamtgewicht des Feeds;
i) Abziehen eines reichen Arbeitsmediums enthaltend Wasser, Wasserstoff und Lithiumhydroxid aus dem zweiten Kompartiment, wobei die Konzentration von Lithiumhydroxid in dem reichen Arbeitsmedium *C*_{M1} bezogen auf das Gesamtgewicht des reichen Arbeitsmediums größer ist als die Konzentration von Lithiumhydroxid in dem armen Arbeitsmedium *C*_{M0} bezogen auf das Gesamtgewicht des armen Arbeitsmediums und wobei die Konzentration von Lithiumhydroxid in dem reichen Arbeitsmedium *C*_{M1} bezogen auf das Gesamtgewicht des reichen Arbeitsmediums größer ist als die Löslichkeit von Lithiumhydroxid in Wasser bei einer Temperatur *T*_{M1}, wobei die Temperatur *T*_{M1} die Temperatur des reichen Arbeitsmediums zum Zeitpunkt seines Abziehens aus dem zweiten Kompartiment bezeichnet.

Das erfindungsgemäße Verfahren ist ein elektrolytisches Membranverfahren, welches mit einer LiSICon Membran arbeitet.

Ein wichtiger Aspekt des erfindungsgemäßen Verfahrens ist, dass in der Zelle gleichzeitig das Lithium durch die Membrane selektiv abgetrennt wird und eine Elektrolyse von Wasser erfolgt. Bei der Wasserelektrolyse wird Wasser (H₂O) elektrochemisch in H₂ und O₂ getrennt. An der Kathode wird OH⁻ und Wasserstoff gebildet. Die OH⁻ - Anionen können die LiSICon-Membran jedoch nicht überwinden und verbinden sich mit den im kathodischen Kompartiment ankommenden Li+-Kationen zu Lithiumhydroxid LiOH. An der Anode wird Sauerstoff und H⁺ gebildet.

Bei dem gleichzeitigen Betrieb der Li+ Membranabtrennung und der Wasserelektrolyse in der elektrochemischen Zelle mit LiSICon Membran entstehen somit direkt Lithiumhydroxid LiOH und molekularer Wasserstoff H₂. Beides ist in Wasser gelöst. Das Wasser mit dem LiOH und dem H₂ wird aus dem kathodischen Kompartiment der Zelle abgezogen. Das LiOH wird von dem Wasser abgetrennt. Auf diese Weise kann ein LiOH gewonnen werden, welches - aufgrund der selektiven Lithium-Ionen-Wanderung durch die Membrane eine entsprechende Reinheit besitzt - in der Batterieproduktion verwendet werden kann.

Der zugleich entstandene Wasserstoff kann aufgefangen und in der Wasserstoffwirtschaft eingesetzt werden. Sofern die elektrochemische Zelle mit grünem Strom betrieben wird, hinterlässt das Verfahren auch einen geringen CO₂-Fußabdruck.

Als Feed für die kombinierte Li Abtrennung und Wasserelektrolyse wird ein Wasser enthaltend Li+ Kationen benötigt. Ein solches Wasser wird entweder im Zuge der Aufarbeitung verbrauchter LIB erzeugt oder es wird eine Li-Sole aus einer natürlichen Lagerstätte verwendet.

Ein wesentlicher Aspekt des Verfahrens ist darin zu sehen, dass die Elektrolyse bis zur Fällungsgrenze des Lithiumhydroxids und darüber hinaus betrieben wird: Folglich ist die Konzentration von Lithiumhydroxid in dem reichen Arbeitsmedium *C*_{M1} bezogen auf das Gesamtgewicht des reichen Arbeitsmediums größer als die Löslichkeit von Lithiumhydroxid in Wasser. Das Lithiumhydroxid kann somit in dem Katholyt als Feststoff ausfallen, sofern darin die notwendigen Kristallisationskeime vorhanden ist. Da diese in Gestalt von geringfügigen Verunreinigungen stets gegenwärtig sind, fällt das LiOH im reichen Arbeitsmedium (Katholyt) zumindest teilweise als Feststoff aus.

Der Zeitpunkt, wann das Lithiumhydroxid in dem Katholyt als Feststoff ausfällt, hängt von den Betriebsbedingungen der Zelle und der Anwesenheit von Kristallisationskeimen ab: Das Lithiumhydroxid kann bereits in dem zweiten Kompartiment als Festkörper ausfallen oder erst unmittelbar nach dem Abziehen des reichen Arbeitsmediums, also erst außerhalb der Zelle. In jedem Fall enthält das reiche Arbeitsmedium, welches aus dem zweiten Kompartiment abgezogen ist, gemäß der Erfindung festes Lithiumhydroxid.

Vorzugsweise enthält das reiche Arbeitsmedium zum Zeitpunkt seines Abziehens aus dem zweiten Kompartiment Lithiumhydroxid als Festkörper.

Festes Lithiumhydroxid bedeutet optimalerweise Lithiumhydroxid in kristalliner Form. Da der Lithiumhydroxidkristall Wasser einlagern kann, kann Lithiumhydroxid auch als Gel vorliegen. In dem Gel bildet das Lithiumhydroxid eine feste Phase, währenddessen das Wasser eine flüssige Phase bildet. Die Gelbildung wird auch von den verbleibenden Verunreinigungen im zweiten Kompartiment bestimmt. Dies bedeutet, dass abhängig von den thermodynamischen Verhältnissen im zweiten Kompartiment sowie von der dortigen Konzentration von Lithiumhydroxid und Verunreinigungen das Lithiumhydroxid als Gel ausfällt. Ein Gel enthaltend festes Lithiumhydroxid und flüssiges Wasser wird daher ebenfalls als Festkörper im Sinne der Erfindung betrachtet. Der Begriff "Festkörper" umfasst daher sowohl eine kristalline Form als auch ein Gel.

Die Fällungsgrenze des Lithiumhydroxid im zweiten Kompartiment wird dann erreicht, wenn die die Konzentration von Lithiumhydroxid in dem reichen Arbeitsmedium *C*_{M1} bezogen auf das Gesamtgewicht des reichen Arbeitsmediums größer ist als die Löslichkeit von Lithiumhydroxid in Wasser bei einer Temperatur *T*_{M1}, wobei die Temperatur *T*_{M1} die Temperatur des reichen Arbeitsmediums zum Zeitpunkt seines Abziehens aus dem zweiten Kompartiment bezeichnet.

Die Löslichkeit von Lithiumhydroxid in Wasser ist nämlich temperaturabhängig, wie bei den meisten wasserlöslichen anorganischen Feststoffen. Die genaue Lage der Fällungsgrenze hängt damit von der Temperatur des reichen Arbeitsmediums ab. Erfindungsgemäß wird auf die Temperatur *T*_{M1} abgestellt, bei der das reiche Arbeitsmedium aus dem zweiten Kompartiment abgezogen wird. Die Temperatur *T*_{M1} liegt optimalerweise zwischen 20°C und 60°C. Diese Temperatur entspricht einfachstenfalls der Betriebstemperatur der elektrochemischen Zelle. Allerdings ist es auch denkbar, die Zelle bei einer höheren Temperatur zu betreiben und das reiche Arbeitsmedium unmittelbar vor oder beim Abzug auf *T*_{M1} abzukühlen. Dies ist aber nicht immer energetisch sinnvoll. Die Löslichkeit von Lithiumhydroxid in Wasser bei relevanten Temperaturen sind in Tabelle 1 dargestellt:

**Tabelle 1: Löslichkeit von LiOH in Wasser**

| Temperatur | Löslichkeit LiOH in H₂O | Konzentration H₂O | Konzentration LiOH |
|---|---|---|---|
| [K] | [kg/kg] | [kg/kg] | [kg/kg] |
| | | | |
| 283.15 | 0.108 | 0.892 | 0.108 |
| 293.15 | 0.1099 | 0.8901 | 0.1099 |
| 298.15 | 0.1114 | 0.8886 | 0.1114 |
| 303.15 | 0.1127 | 0.8873 | 0.1127 |
| 313.15 | 0.1168 | 0.8832 | 0.1168 |
| 323.15 | 0.1212 | 0.8788 | 0.1212 |
| 333.15 | 0.1276 | 0.8724 | 0.1276 |
| 353.15 | 0.1421 | 0.8579 | 0.1421 |
| 373.15 | 0.1605 | 0.8395 | 0.1605 |

In Hinblick auf den angestrebten Temperaturbereich *T*_{M1} von 20°C bis 60°C liegt die Konzentration von Lithiumhydroxid in dem reichen Arbeitsmedium *C*_{M1} bezogen auf das Gesamtgewicht des reichen Arbeitsmediums vorzugsweise oberhalb von 0.1276 kg/kg (das ist nach Tabelle 1 die Löslichkeit von LiOH in Wasser bei einer Temperatur von 333.15 K = 60°C).

Die Konzentration von Lithiumhydroxid in dem armen Arbeitsmedium *C*_{M0} bezogen auf das Gesamtgewicht des armen Arbeitsmediums sollte dagegen weniger als 12.8 Gew.-% betragen. Dadurch wird sichergestellt, dass das LiOH nicht bereits als Feststoff in das zweite Kompartiment eingetragen wird. Die Untergrenze für die LiOH Konzentration im armen Arbeitsmedium beträgt 50 ppm. Andernfalls startet oder läuft die Reaktion nicht.

Im Zusammenhang mit der Darstellung der Löslichkeit von Lithiumhydroxid in Wasser soll deutlich gemacht werden, dass die Zelle nicht genau an der Löslichkeitsgrenze betrieben werden muss. Es ist vorgesehen, die Zelle oberhalb der Fällungsgrenze zu betreiben, damit besonders viel LiOH als Feststoff ausfällt. Die Obergrenze für *C*_{M1} wird bestimmt durch die Pumpbarkeit des reichen Arbeitsmediums: Wenn dieses zu viel festes Lithiumhydroxid enthält, lässt es sich nicht mehr aus dem zweiten Kompartiment abpumpen. Die in Tabelle 1 angegebenen Konzentrationen LiOH entsprechen somit der Untergrenze für *C*_{M1}. Die Obergrenze ergibt sich aus dem apparativen Aufbau der Anlage, mit der das erfindungsgemäße Verfahren durchgeführt wird. Insbesondere der konstruktive Aufbau der Fördermittel, welche das Abziehen des reichen Arbeitsmediums aus dem zweiten Kompartiment und den Transport zu einem nachgeordneten Trennapparat bewerkstelligen, sind insoweit maßgeblich für die Obergrenze. Der Trennappart wird bei der Verwirklichung des erfindungsgemäßen Verfahrens zum Abtrennen des LiOH aus dem reichen Arbeitsmedium verwendet. Neben den Fördermitteln können auch Engstellen in der Zelle und Rohrverbindungen durch kristallisierendes Produkt verstopfen und definieren somit ebenfalls die technisch handhabbare Obergrenze für *C*_{M1}.

Da die anorganische Membran unempfindlich gegen Fremd-Ionen ist, kann der Feed Anionen enthalten, welche ausgewählt sind aus der Gruppe bestehend aus Sulfat, Carbonat, Hydroxid, Chlorid.

Neben den genannten Anionen kann der Feed auch Verunreinigungen in Gestalt von Verbindungen der folgenden Elemente enthalten: B, Na, Mg, Al, Si, K, Ca, Mn, Fe, Co, Ni, Cu, C. Die gelisteten Alkali- und Erdalkalimetalle sind Begleitelemente des Lithiums aus natürlichen Lagerstätten, währenddessen die anderen genannten Metalle als Leiter- oder Kathodenmaterial in LIB verwendet werden und sich daher in Feeds finden, die bei der Aufarbeitung von verbrauchten LIB gewonnen werden. Der Kohlenstoff findet sich ebenfalls in Wertstoffströmen aus der Aufarbeitung gebrauchter LIB und stammt aus polymeren Bestandteilen der Batteriezellen, etwa aus Folien, Separatoren, Kleb- oder Dichtstoffen.

Erfindungsgemäß wird eine Membran verwendet, welche ein anorganisches Material enthält. Anders als bei Polymermembranen ist damit die erforderliche Ionenselektivität zu erreichen. Vorzugsweise besteht die Membran vollständig aus dem anorganischen Material. Verbundmembranen, die das anorganische Material lediglich als Beschichtung auf einem Trägermaterial enthalten oder bei denen das anorganische Material in einem andersartigen Matrixmaterial dispergiert ist, haben sich als Irrweg erwiesen.

Damit der Prozess funktioniert, muss das anorganische Material Li-Ionen leiten und zugleich elektrisch isolieren. Die spezifische Leitfähigkeit für Elektronen g (elektrische Leitfähigkeit) sollte bei einer Temperatur von 23°C weniger als 10⁻⁷ S/cm (10⁻⁹ S/m) oder weniger als 10⁻¹² S/m oder weniger als 10⁻¹⁶ S/m betragen. Das anorganische Material ist daher aus elektronenleitender Sicht als Nichtleiter zu qualifizieren.

Die spezifische Leitfähigkeit s des anorganischen Materials für Li-Ionen sollte einer Temperatur von 23°C mindestens 1*10⁻⁵ S/m oder mindestens 5*10⁻⁵ S/m oder mindestens 10*10⁻⁵ S/m und maximal 100*10⁻⁵ S/m betragen. Die Li-Leitfähigkeit des Materials wird per Impedanz Spektroskopie gemessen. Diese Messung geschieht wie folgt:
Der Messaufbau umfasst zwei zylindrische Elektroden, zwischen denen die Probe angeordnet wird. Um einen optimalen Kontakt mit den Elektroden und reproduzierbaren Kontraktdruck sicher zu stellen, wird in Gewicht auf der Probe platziert.

Ein Potentiostat (ZAHNER-elektrik I. Zahner-Schiller GmbH & Co. KG, Kronach-Gundelsdorf, Germany) wird mit den Elektroden verbunden und über die Software Thales (ZAHNER) gesteuert. Die Messungen werden durchgeführt in einem Frequenzbereich von 1 Hz bis 4 MHz und einer Amplitude von 5mV mit Proben, die poliert wurden und auf die eine dünne, leitfähige Goldschicht aufgesputtert wurde.

Die Messergebnisse werden in Nyquist-Diagrammen dargestellt und mit der Software Analysis (ZAHNER) ausgewertet. Der elektrische Widerstand wird an dem Maximum der Kurve des Nyquist-Diagramms abgelesen. Die spezifische Ionen-Leitfähigkeit σ [mS/cm] wird dann berechnet mit der Formel σ=(h·10⁴)/(R·π/4·d²), worin h für die Höhe der Probe in mm, R für den gemessenen elektrische Widerstand in Ω und d für den Durchmesser der Probe in mm stehen.

Vorzugsweise wird als anorganisches Material ein LiSICon verwendet. LiSICon-Materialien sind (glas)keramische Stoffe, die Lithium-Ionen leiten und zugleich elektrisch isolieren. Es können grundsätzlich alle bekannten LiSICon-Materialien als anorganisches Material im Sinne der Erfindung eingesetzt werden. Bekannte LiSICon-Materialien erfüllen die oben angegebenen Anforderungen sowohl an die elektrische Leitfähigkeit als auch an die lonenleitfähigkeit des anorganischen Materials.

Beispielsweise kann das LiSICon-Material Lithium-Aluminium-Titanphosphat (LATP) verwendet werden. Dementsprechend sieht eine Variante der Erfindung es vor, dass es sich bei dem anorganischen Material um eine Verbindung der folgenden Stöchiometrie handelt:

Li₁₊ₓAlₓTi₂₋ₓ(PO₄)₃

worin gilt: 0.1≤x≤0.3, wobei bevorzugt gilt x=0.3.

Alternativ kann das LiSICon-Material Lithium-Aluminium-Titan-Siliciumphosphat (LATSP) verwendet werden. Dementsprechend sieht eine Variante der Erfindung es vor, dass es sich bei dem anorganischen Material um eine Verbindung der folgenden Stöchiometrie handelt:

Li_{1+x+y}AlₓTi₂₋ₓSi_{y}P_{3-y}O₁₂

worin gilt: 0.1≤x≤0.3 und 0.2≤y≤0

Eine besonders bevorzugte Weiterbildung der Erfindung sieht vor, dass ein LATSP verwendet wird, was zusätzlich Germanium enthält. Ein LAGTSP ist beispielsweise erhältlich von der Fa. OHARA GmbH, Hofheim, Deutschland erhältlich unter dem Produktnamen LICGC^{®} AG01

Die Stöchiometrie von LAGTSP lautet:

Li_{1+x+y}AlₓTi₂₋ₓSi_{y}P_{3-y}O₁₂ * nGeO₂

worin gilt: 0≤x≤1 und 0≤y≤1 und 0≤n≤1.

Alternativ kann das LiSICon-Material Lithium-Aluminium-Germaniumphosphat (LAGP) verwendet werden. Dementsprechend sieht eine Variante der Erfindung es vor, dass es sich bei dem anorganischen Material um eine Verbindung der folgenden Stöchiometrie handelt:

Li₁₊ₓAlₓGe₂₋ₓ (PO₄)₃

worin gilt: x=0 oder x=0.2 oder x=0.4.

Besonders bevorzugt wird aber ein LiSICon verwendet, welches sich aus dem Lithium-Aluminium-Germaniumphosphat (LAGP) ableitet, aber zusätzlich Titan enthält. Es wird als LAGTP bezeichnet.

Dementsprechend sieht eine bevorzugte Variante der Erfindung es vor, dass es sich bei dem anorganischen Material um eine Verbindung der folgenden Stöchiometrie handelt:

Li_{1.4}Al_{0.4}(Ge₁₋ₓTiₓ)_{1.6} (PO₄)₃

worin gilt: 0≤x≤1.

Als Alternative zu den vorgenannten Phosphaten kann das oxidische LiSICon-Material Lithium-Lanthan-Titanoxid (LLTO) verwendet werden. Dementsprechend sieht eine Variante der Erfindung es vor, dass es sich bei dem anorganischen Material um eine Verbindung der folgenden Stöchiometrie handelt:

Li₃ₓLa_{(2/3)-x□(1/3)-2x}TiO₃

worin gilt: 0≤x≤0.16.

Das Lithiumhydroxid ist in dem reichen Arbeitsmedium enthalten und wird mit diesem aus dem zweiten Kompartiment abgezogen. Um es nutzbar zu machen, muss es aus dem reichen Arbeitsmedium abgetrennt werden. Dafür wird ein Trennapparat bereitgestellt. Eine bevorzugte Weiterbildung der Erfindung sieht daher die folgenden zusätzlichen Verfahrensschritte vor:
k) Bereitstellen eines Trennapparates;
l) Abtrennen von Lithiumhydroxid aus dem reichen Arbeitsmedium mit Hilfe des Trennapparates.

Vorzugsweise wird der Prozess so gefahren, dass mit Hilfe des Trennapparat ein Produkt abgetrennt wird, welches die folgende Zusammensetzung aufweist:

| | |
|---|---|
| Lithiumhydroxid: | >56.5 Gew.-% |
| Wasser: | <43.5 Gew.-% |
| Kohlendioxid: | <0.35 Gew.-% |
| Schwefeldioxid: | <0.01 Gew.-% |
| Chlor: | <0.002 Gew.-% |
| Calcium: | <15 Gew.-ppm |
| Eisen: | <5 Gew.-ppm |
| Natrium: | <20 Gew.-ppm |
| Aluminium: | <10 Gew.-ppm |
| Chrom: | <5 Gew.-ppm |
| Kalium: | <10 Gew.-ppm |
| Kupfer: | <5 Gew.-ppm |
| Nickel: | <10 Gew.-ppm |
| Silicium: | <30 Gew.-ppm |
| Zink: | <10 Gew.-ppm |
| Sonstige Stoffe: | <10 Gew.-% |

wobei die Gewichtsanteile sich zu 100 % ergänzen, und bezogen sind auf das Gesamtgewicht des Produkts. Ein derartiges Produkt ist "battery-grade" LiOH und kann direkt in der Herstellung von LIB verwendet werden.

Das im Trennapparat abgeschiedene Produkt enthält festes Lithiumhydroxid. Das Produkt erfüllt vorzugsweise die vorstehende Spezifikation, damit es unmittelbar als "battery-grade LiOH" für die Herstellung von neuen LIB eingesetzt werden kann. Gleichwohl handelt es sich bei dem abgetrennten Produkt nicht um reines LiOH, prinzipbedingt wird das abgetrennte Produkt stets Wasser enthalten, welches in den Kristallen des LiOH eingeschlossen ist (Kristallwasser/ inneres Wasser). Der Wassergehalt des abgetrennten Produkts liegt aber unter 43.5 Gew.-% und erfüllt daher die Spezifikation "battery-grade". Das abgetrennte Produkt ist bei diesem Wassergehalt ein kristalliner Festkörper und kein Gel.

Das Arbeitsmedium, welches in dem Trennappart von dem LiOH befreit wurde, wird als armes Arbeitsmedium zurück in die elektrochemische Zelle gefördert und dort neu beladen. Das Arbeitsmedium wird mithin in einem geschlossenen Kreislauf geführt. Der Kreislauf des Arbeitsmediums entsteht zwischen dem zweiten Kompartiment und dem Trennapparat. Die Kreislaufführung des Arbeitsmediums spart sowohl die Bereitstellung von Frischwasser, als auch die Entsorgung von Abwasser.

Wichtig ist, dass das arme Arbeitsmedium nicht vollkommen frei von LiOH ist, sondern eine gewisse Mindestkonzentration *C*_{M0} von etwa 50 Gew.-ppm aufweist. Anderweitig ließe sich der Prozess in der Zelle nicht kontinuierlich aufrechterhalten. Der Trennapparat trennt somit nicht das im reichen Arbeitsmedium enthaltene LiOH vollständig ab, sondern belässt eine Restkonzentration im Arbeitsmedium. Vorzugsweise trennt der Trennapparat ausschließlich festes LiOH ab und lässt gelöstes LiOH im Arbeitsmedium als Startkonzentration *C*_{M0} zurück.

Eine bevorzugte Weiterbildung der Erfindung sieht daher den folgenden zusätzlichen Verfahrensschritten vor:
l) Abtrennen von Lithiumhydroxid aus dem reichen Arbeitsmedium mit Hilfe des Trennapparates, sodass das arme Arbeitsmedium erhalten wird, wobei der Schritt
b) Bereitstellen eines armen Arbeitsmediums enthaltend Wasser und darin gelöst Lithiumhydroxid, wobei die Konzentration von Lithiumhydroxid in dem armen Arbeitsmedium *C*_{M0} bezogen auf das Gesamtgewicht des armen Arbeitsmediums mindestens 50 Gew.-ppm beträgt; mit Hilfe des Trennapparates erfolgt.

Um die Kreislaufführung des Arbeitsmediums zwischen Trennapparat und zweiten Kompartiment in zu ermöglichen, macht es Sinn, beide Apparate an demselben Ort aufzustellen. Derselbe Ort ist als eine zusammenhängende Produktionsanlage zu verstehen. Folglich sind elektrochemische Zelle und Trennappart Teil einer zusammenhängenden Anlage. Dank des geschlossenen Kreislaufes des Arbeitsmediums lassen sich elektrochemische Zelle und Trennappart an demselben Ort aufstellen und kontinuierlich betrieben. Vorzugsweise wird der Prozess direkt in einen Verbund eingegliedert, welcher eine Anlage zur Aufarbeitung von gebrauchter LIB und eine Anlage zur Herstellung neuer LIBs umfasst. Es ist aber auch möglich, den Prozess lediglich mit einer Batterie-Recycling-Anlage zu kombinieren und das gewonnene LiOH zu exportieren.

Es ist auch denkbar, den Trennappart entfernt von der elektrochemischen Zelle, an einem anderen Standort aufzustellen. Dann muss allerdings das Arbeitsmedium zwischen Zelle und Trennappart transportiert werden. Dies macht aus energetischen Gesichtspunkten aber kaum Sinn.

Vorzugsweise wird zumindest die elektrochemische Zelle kontinuierlich betrieben. Dies bedeutet, dass das beide Kompartimente dauerhaft durchströmt werden. Das erste Kompartiment wird von dem Feed durchströmt, wobei Abwasser entsteht, währenddessen das zweite Kompartiment von Arbeitsmedium durchströmt wird, welches als armes Arbeitsmedium anströmt und als reiches Arbeitsmedium abströmt. Dies ermöglicht einerseits einen höheren Durchsatz und anderseits werden membranschädliche Bestandteile in Feed und Arbeitsmedium kontinuierlich abgezogen. Daher ist im kontinuierlichen Betrieb eine bessere Membranhaltbarkeit zu erwarten als im Batchbetrieb.

Eine bevorzugte Ausführungsform des Prozesses sieht es daher vor, dass zumindest die Verfahrensschritte
i) Abziehen eines reichen Arbeitsmediums enthaltend Wasser, Wasserstoff und Lithiumhydroxid aus dem zweiten Kompartiment;
   und
l) Abtrennen von Lithiumhydroxid aus dem reichen Arbeitsmedium mit Hilfe des Trennapparates;
kontinuierlich erfolgen.

Da das LiOH in dem erfindungsgemäßen Verfahren als Feststoff anfällt, ist der Trennappart vorzugsweise als Festkörperabscheider ausgeführt. Geeignete Festkörperabscheider sind Filter, Hydrozyklone und Absetzabscheider. Diese Apparate kommen ohne thermische Energie aus. Folglich benötigt der hier beschriebene Prozess primär die elektrische Energie zum Betrieb der elektrochemischen Zelle und sekundäre elektrische Energie zum Fördern der Stoffströme. Das Verfahren lässt sich somit vorzugsweise mit grünem Strom betreiben.

### Figurenbeschreibung:

Die Erfindung soll nun anhand von Prozessfließbildern näher erläutert werden. Hierfür zeigen:
- Figur 1:: Funktionsprinzip zeitgleiche Membranelektrolyse von Li⁺ und Wasserelektrolyse in elektrochemischer Zelle mit LiSICon Membran;
- Figur 2:: Funktionsprinzip Kreislauf zwischen elektrochemischer Zelle und Trennapparat.

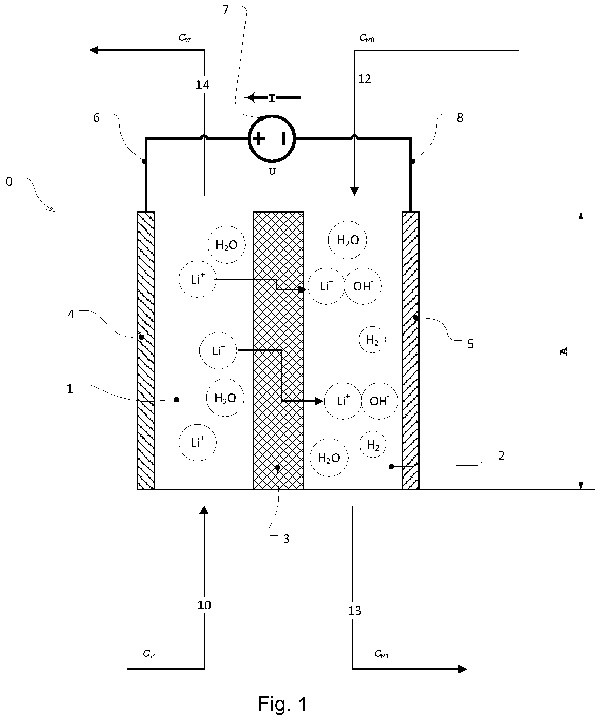

Die für die Durchführung des Verfahrens notwendige elektrochemische Zelle 0 ist in Figur 1 dargestellt. Sie umfasst ein erstes Kompartiment 1 und ein zweites Kompartiment 2. Beide Kompartimente 1, 2 sind von einer Membran 3 voneinander getrennt. In dem ersten Kompartiment 1 ist eine Anode 4 angeordnet. In dem zweiten Kompartiment 2 ist eine Kathode 5 angeordnet. Das erste Kompartiment 1 kann daher auch als anodisches Kompartiment bezeichnet werden, währenddessen das zweite Kompartiment 2 als kathodisch bezeichnet wird.

Eine erste elektrische Leitung 6 verbindet die Anode 4 mit einer Spannungsquelle 7. Eine zweite elektrische Leitung 8 verbindet die Kathode 5 mit der Spannungsquelle 7. Die Polarität der Spannungsquelle 7 ist so gewählt, dass der positive Pol der Spannungsquelle 7 auf die Anode 4 geschaltet ist, währenddessen der negative Pol der Spannungsquelle 7 auf die Kathode 5 geschaltet ist.

Durch die beiden elektrischen Leitungen 6, 8 und über die elektrische Spannungsquelle 7 fließt ein elektrischer Strom *I*. Da die Membran 3 elektrisch isoliert, gibt es keinen elektrischen Kurzschluss zwischen den beiden Elektroden 4, 5 über die Membran 3.

Die Membran 3 ist eine Flachmembran, die vollständig aus einem LiSICon Material besteht. Die Anode 4 ist ein metallisches, flaches Blech enthaltend Titan, Niob oder Tantal. Die Kathode 5 ist ebenfalls ein flaches Metallblech enthaltend Titan oder Nickel. Einfachstenfalls wird rostfreies Stahlblech als Kathode verwendet. Anode 4, Kathode 5 und Membran 3 haben dieselbe Gestalt, sie können rechteckig oder kreisrund sein. Dies ist in der Seitenansicht der Figur 1 nicht zu erkennen. Anstelle von Blechen können auch Streckmetalle, Gitter oder Netze aus den angegebenen Materialien als Elektrode verwendet werden.

Die elektrochemische Zelle 0 weist eine aktive Fläche A auf, welche dem Flächeninhalt der Membran 3, der Anode 4 und der Kathode 5 entspricht.

Im Betrieb wird das erste Kompartiment 1 mit einem Feed 10 beaufschlagt. Bei dem Feed 10 handelt es sich um eine wässrige Lösung enthaltend Li+ Kationen. Aus elektrochemischer Sicht ist der Feed 10 als Anolyt aufzufassen.

Bei dem Feed 10 kann es sich um eine Li-Lauge aus einer natürlichen Lagerstätte handeln oder um ein Stoffstrom, der bei der Aufarbeitung von verbrauchten LIB anfällt. Die Konzentration der Li+ Kationen im Feed 10 (Formelbuchstabe c_{F}) sollte mindestens 200 Gew.-ppm betragen, bezogen auf die Gesamtmasse des Feeds. Meerwasser hat eine geringere Li-Konzentration und müsste daher erst aufkonzentriert werden, bevor es in dem Verfahren verwendet wird. Der Feed 10 enthält auch Anionen wie Sulfat oder Chlorid. Die Feed 10 enthält auch Verunreinigungen. Anionen und Verunreinigungen sind in Figur 1 nicht dargestellt. Hauptkomponente des Feeds 10 ist Wasser H₂O.

Das zweite Kompartiment wird mit einem armen Arbeitsmedium 12 beaufschlagt. Das arme Arbeitsmedium 12 ist Wasser H₂O mit einer geringen Konzentration *C*_{M0} Li+ Kationen. Die Konzentration *c*_{M0} beträgt mindestens 50 Gew.-ppm bezogen auf die Gesamtmasse des armen Arbeitsmediums 12. Aus elektrochemischer Sicht ist das arme Arbeitsmedium 12 als Katholyt aufzufassen.

Die elektrochemische Zelle 0 wird zudem mit einer von der Spannungsquelle 7 bezogener elektrischer Spannung U beaufschlagt. Dies bewirkt folgendes:
Zum einen kommt es zu einer Wasserelektrolyse, bei der Wasser (H₂O) elektrochemisch in Wasserstoff (H₂) und Sauerstoff (O₂) getrennt wird. An der Kathode 5 wird OH⁻ und Wasserstoff gebildet. Die OH⁻ - Anionen können die Membran 3 allerdings nicht überwinden und verbinden sich mit den im kathodischen Kompartiment 2 vorhandenen Li+ -Kationen zu Lithiumhydroxid (LiOH). An der Anode 4 wird Sauerstoff und H⁺ gebildet.

Die Bildung des LiOH im kathodischen Kompartiment 2 wird dadurch aufrechterhalten, dass Li+ Kationen getrieben von der Spannung U aus Feed 10 in Richtung der Kathode 5 wandern. Sie überwinden dabei die Membran 3 aufgrund deren Leitfähigkeit für Li Ionen und reichern sich im Arbeitsmedium an (Membranelektrolyse). So entsteht ein reiches Arbeitsmedium 13, was aus dem zweiten Kompartiment 2 abgezogen wird. Die Konzentration an Li+ Ionen im reichen Arbeitsmedium 13 ist größer als im armen Arbeitsmedium 12, es gilt *c*_{M1} > *c*_{M0}

In der elektrochemischen Zelle 0 läuft somit gleichzeitig eine Wasserelektrolyse, eine Membranelektrolyse von Li⁺ und eine Synthese von LiOH ab.

Bei dem gleichzeitigen Betrieb der Li+ Membranelektrolyse und der Wasserelektrolyse in der elektrochemischen Zelle entstehen somit direkt Lithiumhydroxid LiOH und molekularer Wasserstoff H₂. Der Wasserstoff ist zumindest teilweise gelöst, er kann auch in Gasblasen vorliegen. Das Lithiumhydroxid ist erfindungsgemäß oberhalb seiner Löslichkeit konzentriert. Dies bedeutet, dass das Lithiumhydroxid zumindest teilweise als Feststoff im reichen Arbeitsmedium 13 vorliegt.

Das LiOH fällt abhängig von der Temperatur und von der Anwesenheit bereits im zweiten Kompartiment 2 oder unmittelbar nach dem Abziehen des reichen Arbeitsmediums 13 aus.

Der Feed 10 wird durch die Membranelektrolyse um Li⁺ abgereichert, sodass ein Abwasser 14 entsteht. Es gilt cw < *c*_{F}. Der Formelbuchstabe *c*_{W} steht dabei für die Konzentration von Li Ionen in dem Abwasser 14, bezogen auf die Gesamtmasse des Abwassers 14. Der Formelbuchstabe *c*_{F} steht dabei für die Konzentration von Li Ionen in dem Feed 10, bezogen auf das Gesamtgewicht des Feeds 10.

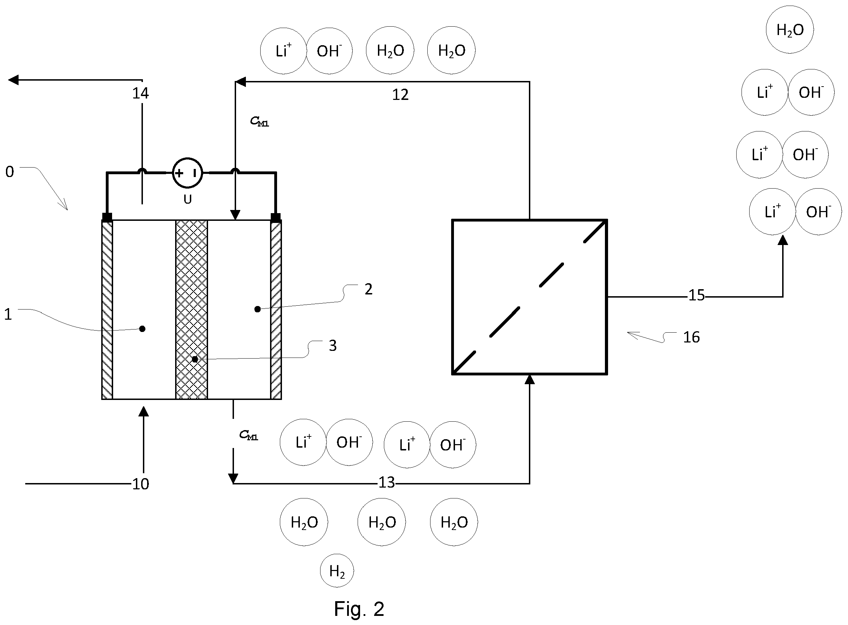

In Figur 2 ist dargestellt, wie das LiOH als Zielprodukt 15 aus dem reichen Arbeitsmedium 13 gewonnen wird.

Dazu wird ein Trennapparat 16 bereitgestellt, in welchen das reiche Arbeitsmedium 13 hineingefahren wird. Der Trennapparat 16 trennt von dem reichen Arbeitsmedium 13 das Zielprodukt 15 ab, welches eine besonders hohe Konzentration an LiOH hat. Das Zielprodukt enthält auch Wasser und Verunreinigungen, abhängig von der gewünschten Spezifikation des Zielprodukts.

Da das reiche Arbeitsmedium 13 LiOH in fester Form enthält, handelt es sich bei dem Trennapparat 16 vorzugsweise um einen Festkörperabscheider, wie beispielsweise ein Filter. Das feste LiOH wird aus dem reichem Arbeitsmedium 13 abgefiltert und entspricht dem eigentlichen Produkt des Prozesses.

Der um LiOH abgereicherte Ausgangsstrom des Trennapparts 16 wird als armes Arbeitsmedium 12 in das zweite Kompartiment 2 der elektrochemischen Zelle 0 rezykliert.

Wie bereits erwähnt, muss das arme Arbeitsmedium 12 eine gewisse Konzentration *C*_{M0} an LiOH enthalten, damit der Prozess in der elektrochemischen Zelle 0 dank eines geringen Startwiderstands wie gewünscht anläuft. Die *C*_{M0} soll mindestens 50 Gew.-ppm. betragen bezogen auf die Gesamtmasse des armen Arbeitsmediums 12. Damit die erforderliche Konzentration *C*_{M0} gewährleistet ist, wird der Trennappart 16 so gefahren, dass er das LiOH nicht vollständig aus dem reichen Arbeitsmedium 13 abgetrennt. Dies ist bei Verwendung eines Festkörperabscheiders besonders einfach, denn die gelösten Anteile des LiOH werden davon in dem Arbeitsmedium belassen und können mit der erforderlichen Startkonzentration größer 50 ppm in das zweite Kompartiment 2 rezykliert werden.

Neben Lithiumhydroxid LiOH erzeugt der Prozess auch Wasserstoff H₂. Der Wasserstoff H2 ist in dem reichen Arbeitsmedium 13 zumindest teilweise gelöst und wird zusammen mit dem LiOH aus dem zweiten Kompartiment 2 abgezogen.

Da der Wasserstoff H₂ leicht aus dem Wasser ausgast, braucht kein großer Aufwand betrieben werden, um ihn aus dem reichen Arbeitsmedium zu entfernen. Nur dann, wenn der Wasserstoff H₂ als zweites Zielprodukt verwertet werden soll, ist ein entsprechender zweiter Trennapparat vorzusehen, welcher der Wasserstoff separat in geeigneter Qualität/ Reinheit gewinnt (nicht dargestellt).

Das Wasser H₂O, welches in dem reichen Arbeitsmedium 13 enthalten ist, wird weitestgehend vollständig als armes Arbeitsmedium 12 rezykliert. Lediglich das in dem Zielprodukt 15 enthaltene (Kristall-)Wasser geht aus dem Prozess verloren. Es muss entsprechend in das arme Arbeitsmedium 12 nachdosiert werden (nicht dargestellt). Das in dem Feed 10 enthaltene Wasser gelangt nicht in den Kreislauf zwischen zweiten Kompartiment 2 und Trennapparat 16, weil die Membran 3 wasserundurchlässig ist.

### Versuche:

Die mit der Erfindung erzielten Effekte werden nun anhand von Versuchen erläutert.

Zur Durchführung der Elektrolyse wird zunächst die Elektrolysezelle zusammengebaut und an Anolyt- und Katholyt-Behälter angeschlossen. Dabei wird darauf geachtet, dass Zu- und Rücklauf jeweils auf der gleichen Seite angeschlossen werden.

Als Anode und Kathode wurde jeweils eine runde Scheibe mit einem Durchmesser von 19.5 mm und einer Stärke von 1 mm verwendet. Bei dem Material handelte es sich jeweils um ein Titan-Streckblech, beidseitig beschichtet mit IrTi-Mischoxid, 12 g Ir/m2, 1 AF D1,5 mm von der Fa. Metakem GmbH, 61250 Usingen, Deutschland.

Die beprobten Membranen waren ebenfalls kreisrunde Scheiben mit einem Durchmesser von etwa 25 mm. Die Stärke der Membranen betrug etwa 1 mm. Das Material der beprobten Membranen war ein LATSP, nämlich LICGC^{®} PW01 von OHARA GmbH, Hofheim, Deutschland.

Die Elektrolyse und die entsprechenden Vorlagebehälter sind während der gesamten Durchführung mit Stickstoff überlagert, um die Bildung von Lithiumcarbonat zu verhindern. Jede Zelle hat einen separaten Anolyt- und Katholyt-Behälter. Jeder Behälter wird mit etwa 1 kg Flüssigkeit gefüllt, die genaue Masse wird durch Rückwaage ermittelt. In allen Versuchen war der Katholyt immer eine 5mmol/L LiOH Lösung (entspricht 120 Gew. ppm LiOH). Der Anolyt ist jeweils eine Lithiumsalzlösung in verschiedenen Konzentrationen und verschiedenen Lithiumsalzen. Die jeweilige Startkonzentration betrug 1.0 mol/L LiOH. Die genaue Konzentration variiert im Versuchsverlauf und ist daher auch im Diagramm der Versuche jeweils aufgeführt.

Durch Einschalten der Pumpen und der gewünschten Spannung wird der Versuch gestartet. Die maximale Durchflussgeschwindigkeit beträgt 900 mL/ Minute. Die Probenahme erfolgt halbstündlich oder nach Absprache in größeren Zeitintervallen. Es werden 3mL Vorlauf gezogen und verworfen. Bei jeder Probenahme wird der jeweilige Strom notiert und von der Probe wird der pH-Wert und die Leitfähigkeit bestimmt. Anschließend werden die Proben in die entsprechenden Behälter zurückgegeben, um das Volumen nahezu konstant zu halten.

Nach Ende des Versuches werden die Behälter entleert und alle Leitungen und auch die Membran werden mit VE-Wasser gespült. Die Zelle wird auseinander gebaut, Membran wird fotografiert und es werden REM-Aufnahmen von Katholyt- und Anolytseite gemacht, um eventuelle Schädigungen oder Veränderungen der Membranen zu dokumentieren.

Die Membranperformance wird an den Kenngrößen der Permeabilität (gLi*mm/m²*h) und Permeanz (g Li/m²*h) gemessen. Die Permeanz gibt an, wie viel Masse an Lithium pro Membranfläche und Zeit durch die Membran transportiert werden. Die Permeabilität bezieht noch die Membrandicke mit ein und ermöglicht es somit auch unterschiedliche Membrantypen mit verschiedenen Dicken miteinander zu vergleichen. Man benötigt beide Angaben zur umfänglichen Beschreibung der Performance, da extrem dünne Membranen eine enorm hohe Permeanz ermöglichen würden, aber sofern es zu Konzentrationspolarisationseffekten in der Membranzelle kommt, würden die Permeabilitäten falsch wiedergegeben. Die Berücksichtigung der Membrandicke ist dann nicht mehr Zielführend, da der Transport nicht durch die Membran limitiert ist.

Alle in den Beispielen gezeigten Messwerte sind mit einem Mess-Fehler von ca. +/- 10% behaftet, der sich auf Ungenauigkeiten der Positionierung der Elektroden zueinander, der Bestimmungen der Dicke der Membranproben und der Konzentrationsbestimmung über Leitfähigkeitsmessungen zurückführen lässt.

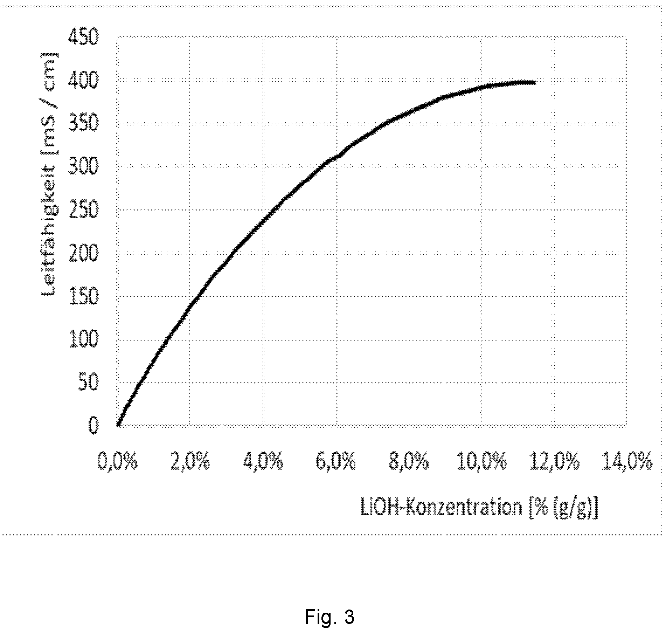

Die Konzentrationsbestimmung erfolgte Inline über eine Leitfähigkeitsmessung. Über die in Figur 3 dargestellte Kalibrierkurve wird in den Versuchsergebnissen die Leitfähigkeit in eine Konzentration übersetzt.

### Figur 3: Leitfähigkeit als Funktion der Konzentration einer LiOH-Lösung (25°C)

Folglich ist aber bei Konzentrationen über ca. 10 % LiOH eine genaue Verfolgung der wirklichen Konzentration über die Leitfähigkeitsmessungen kaum möglich.

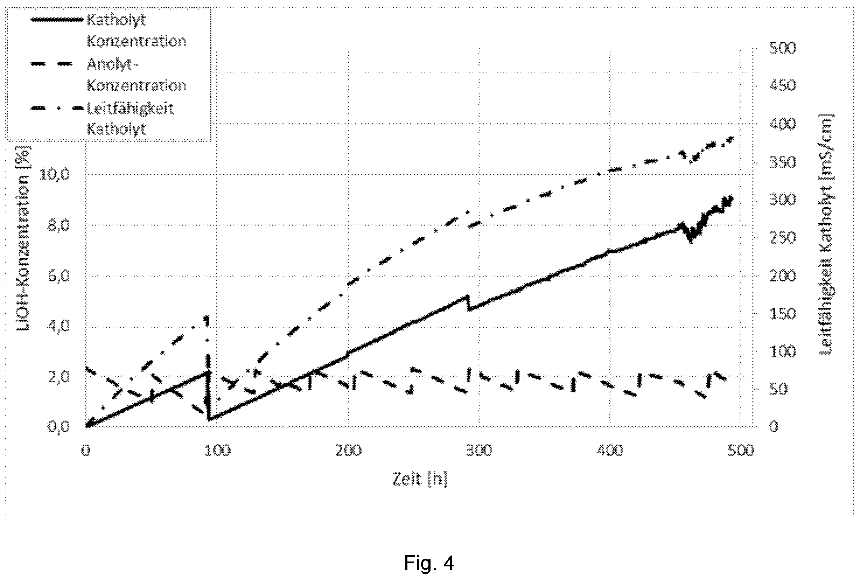

Erster Versuch:
Ein erster Versuch zur Aufkonzentrierung auf größer 10% LiOH ist in Tabelle 2 und Figur 4 zusammengefasst, wobei hier die reduzierte Genauigkeit der Konzentrationsbestimmung über die Leitfähigkeitsbestimmung zu berücksichtigen ist.

**Tabelle 2: Versuchsparameter**

| Membranmaterial | LATSP (Ohara) |
|---|---|
| Membrandicke [mm] | 2.0 |
| Membrandurchmesser [mm] | 100 |
| Membranfläche [cm2] | 70.88 |
| Spannung [V] | 6.0 |
| Stromausbeute[%] | 94% |
| Permeanz (gLi/(m².h)) | 8.11 |
| Elektrolysedauer [h] | 493 |
| Temperatur [°C] | 24 bis 27 |

### Figur 4: graphische Darstellung der Versuchsergebnisse

Der in Figur 4 zu erkennende, zackenförmige Verlauf der Anolyt-Leitfähigkeit beruht auf der regelmäßigen Erneuerung des Anolyten, wenn dieser eine Konzentration von weniger als ca. der Hälfte der Startkonzentration erreicht hat. Nach ca. 100h musste einmal der Katholyt ausgetauscht werden, da es zu einer Undichtigkeit der Zelle kam. Dies führte dann dazu, dass die Konzentration und somit die Leitfähigkeit der Katholyt-Lösung sehr stark zurück ging. In diesem Versuch konnte gezeigt werden, dass mit dieser Vorgehensweise die Lithiumhydroxid-Konzentration deutlich über die Startkonzentration des Anolyten aufkonzentriert werden konnte. Der Versuch wurde nach ca. 500h Laufzeit bei einer Aufkonzentrierung auf ca. 9% Lithiumhydroxid beendet, da eine differenzierte Auswertung der Konzentration des Lithiumhydroxid nicht gegeben war. Der Katholyt hatte eine Temperatur von 27°C, es kam nicht zur Bildung von festem Lithiumhydroxid.

Zweiter Versuch:
Ein Wiederholungsversuch mit den gleichen Vorgaben wie in Tabelle 2 führte zum folgenden Ergebnis:

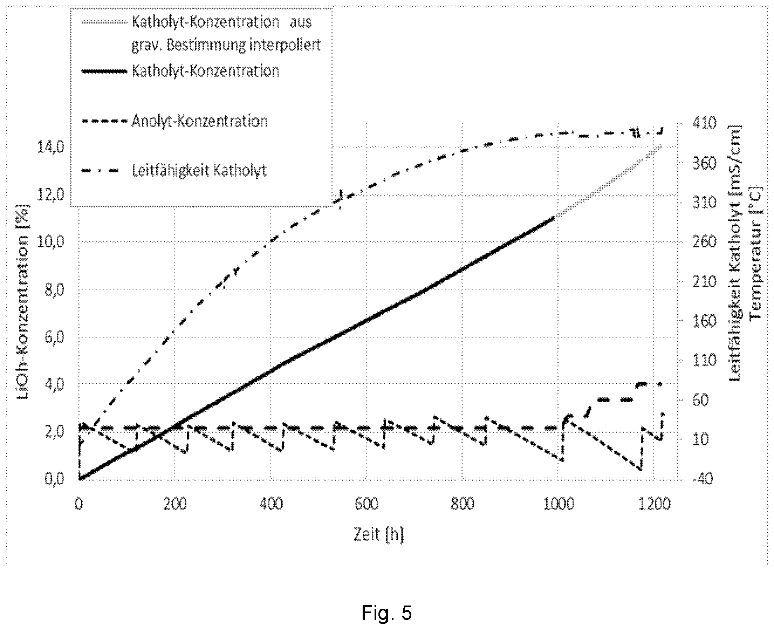

### Figur 5: graphische Darstellung der Ergebnisse des Wiederholungsversuches

Auch in Figur 5 ist die regelmäßige Erneuerung der Anolyt-Lösung im zackenförmigen Verlauf der Leitfähigkeitsmessung im Anolyten zu erkennen. Die Katholyt-Leitfähigkeit steigt über den Zeitraum von ca. 1000 Stunden bis zu einem Grenzwert von ca. 395 bis 400 mS/cm, der sich aus der Löslichkeit und den elektrischen Eigenschaften einer Lithiumhydroxid-Lösung bei der Temperatur von ca. 25°C ergibt. Da, wie bereits oben beschrieben, die genaue Konzentration nicht über die Leitfähigkeit bestimmt werden kann, wurde nach ca. 1010 Stunden Betriebszeit eine Probe genommen und gravimetrisch der Lithiumhydroxid-Gehalt bestimmt.

Danach wurde die Temperatur des Anolyt und des Katholyt auf 40°C erhöht und die Elektrolyse wurde weiter betrieben. Bei der Leitfähigkeitsbestimmung wurde eine Temperaturkorrektur, wie vom Hersteller des Messgerätes vorgegeben, vorgenommen. Bei dieser erhöhten Temperatur ist die Leitfähigkeit (mit Temperaturkorrektur) nicht weiter gestiegen, so dass diese bei ca. 400 mS/cm blieb.

Nach einem Weiterbetrieb der Elektrolyse für 48 Stunden sollte die Sättigungsgrenze für Lithiumhydroxid bei der Temperatur von 40°C erreicht sein. Daher wurde nun erneut eine Probe aus dem Katholyt-Kreislauf genommen und hiervon wurde der Lithiumhydroxid-Gehalt gravimetrisch bestimmt.

Danach wurde die Temperatur beider Kreisläufe auf 60°C erhöht und die Elektrolyse weiter betrieben. Nach weiteren ca. 90 Stunden sollte wiederum die Sättigungskonzentration für diese Temperatur erreicht sein, welches über eine Probenahme und gravimetrischer Feststoffgehaltsbestimmung bestätigt werden sollte. Mit einer abschließenden Erhöhung der Temperatur auf 80°C und einem Weiterbetrieb bis zur angestrebten Sättigungskonzentration für den geplanten Zeitraum von ca. 110 Stunden konnte der Versuch nicht beendet werden, da nach ca. 60 Stunden eine Undichtigkeit an der Messapparatur auftrat. Es wurde eine Probe zur Bestimmung des Feststoffgehaltes genommen.

Der restliche Katholyt wurde daraufhin abgelassen, unter Stickstoff-Atmosphäre auf Raumtemperatur abgekühlt und einige Zeit stehen gelassen, so dass sich ein Teil des Lithium-hydroxid aus der nun bei 20°C gehaltenen Lösung als weißer Bodenbelag absetzen konnte. Alle Arbeiten zur Konzentrationsbestimmung wurden unter Ausschluss von Kohlendioxid und mit Stickstoff-Überlagerung durchgeführt.

Die Ergebnisse der einzelnen Gehaltsbestimmungen sind in Tabelle 3 zusammengefasst. Sie geben die am Ende einer jeweiligen Temperaturstufe über die Probenahme bestimmte Menge an Lithiumhydroxid in der Lösung wieder. Die mittleren Permeabilitäten berechnen sich aus den bestimmten Gehalten, der Elektrolysedauer und der Fläche der verwendeten Membran.

**Tabelle 3: Lithium-Hydroxid-Gehalte der verschiedenen Proben**

| Laufzeit [h] | Temperaturstufe [°C] | LiOH-Gehalt [ % (g/g)] | Mittlere Permeabilität [g / m² h] | Löslichkeit* bei der Temperatur [% (g/g)] |
|---|---|---|---|---|
| 1010 | 25 | 11.2 | 7.9 | 11.1 |
| 1058 | 40 | 11.9 | 8.7 | 11.7 |
| 1148 | 60 | 13.1 | 9.7 | 12.8 |
| 1210 | 80 | 14.0 | 10.1 | 14.2 |

| | | | | |
|---|---|---|---|---|
| *Die Löslichkeiten von LiOH wurden aus Tabelle 1 übernommen. | | | | |

Aus der Tabelle 3 lässt sich entnehmen, dass der LiOH Gehalt bis etwa 0.1 % - 0.3 % über die Sättigungsgrenze gefahren wurde. Nach dem Abkühlen bildete sich festes LiOH * H2O.

Fazit:
Die Versuche belegen, dass es möglich ist, den Prozess so weit zu fahren, dass die Löslichkeitsgrenze des LiOH in der Zelle überschritten wird. Auf diese Weise lässt sich allein mit der elektrochemischen Zelle festes LiOH erzeugen.

### Bezugszeichenliste

- 0: elektrochemische Zelle
- 1: erstes Kompartiment
- 2: zweites Kompartiment
- 3: Membran
- 4: Anode
- 5: Kathode
- 6: erste elektrische Leitung
- 7: Spannungsquelle
- 8: zweite elektrische Leitung
- 9: nicht vergeben
- 10: Feed
- 11: nicht vergeben
- 12: armes Arbeitsmedium
- 13: reiches Arbeitsmedium
- 14: Abwasser
- 15: Zielprodukt
- 16: Trennapparat

- H₂O: Wasser
- H₂: Wasserstoff
- O₂: Sauerstoff
- LiOH: Lithiumhydroxid
- OH⁻: OH-Anionen
- Li+: Lithium Kationen

- U: elektrische Spannung
- I: elektrischer Strom
- A: aktive Fläche
- *C*_{F}: Konzentration LiOH im Feed
- Cw: Konzentration LiOH im Abwasser
- *C*_{M0}: Konzentration LiOH im armen Arbeitsmedium
- *C*_{M1}: Konzentration LiOH im reichen Arbeitsmedium

## Patentansprüche

1. Verfahren zur Herstellung von Wasserstoff und Lithiumhydroxid mit den folgenden Schritten:
a) Bereitstellen eines Feeds enthaltend zumindest Wasser, Li-Ionen, sowie Verunreinigungen, wobei die Konzentration von Li-Ionen in dem Feed *C*_{F} mindestens 200 Gew.-ppm oder zwischen 500 Gew.-ppm und 140000 Gew.-ppm beträgt, jeweils bezogen auf das Gesamtgewicht des Feeds;
b) Bereitstellen eines armen Arbeitsmediums enthaltend Wasser und darin gelöst Lithiumhydroxid, wobei die Konzentration von Lithiumhydroxid in dem armen Arbeitsmedium *C*_{M0} bezogen auf das Gesamtgewicht des armen Arbeitsmediums mindestens 50 Gew.-ppm beträgt;
c) Bereitstellen von mindestens einer elektrochemischen Zelle, wobei die elektrochemische Zelle die folgenden Merkmale aufweist:
i. die elektrochemische Zelle umfasst ein erstes Kompartiment, in dem eine Anode angeordnet ist;
ii. die elektrochemische Zelle umfasst ein zweites Kompartiment, in dem eine Kathode angeordnet ist;
iii. die elektrochemische Zelle umfasst eine Membran, welche das erste Kompartiment von dem zweiten Kompartiment trennt, wobei die Membran die Fläche A aufweist;
iv. die Membran enthält ein anorganisches Material, welches eine Leitfähigkeit für Li-Ionen besitzt und welches elektrisch isolierend ist;
d) Bereitstellen von mindestens einer elektrischen Spannungsquelle, welche über eine erste elektrische Leitung mit der Anode und über eine zweite elektrische Leitung mit der Kathode verbunden ist;
e) Beaufschlagen des ersten Kompartiments mit dem Feed;
f) Beaufschlagen des zweiten Kompartiments mit dem armen Arbeitsmedium;
g) Beaufschlagen der elektrochemischen Zelle mit einer von der elektrischen Spannungsquelle bezogenen elektrischen Spannung U, dergestalt, dass ein elektrischer Strom *I* zwischen Anode und Kathode fließt, wobei der Quotient Q aus der Stromstärke des elektrischen Stroms *I* und der Fläche A der Membran zwischen 100 A/m² und 500 A/m² oder zwischen 150 A/m² und 350 A/m² beträgt;
h) Abziehen von Abwasser enthaltend zumindest Wasser, darin gelöste Li-Salze, Sauerstoff, sowie Verunreinigungen aus dem ersten Kompartiment, wobei die Konzentration von Li-Ionen in dem Abwasser Cw bezogen auf das Gesamtgewicht des Abwassers geringer ist als die Konzentration von Li-Ionen im Feed *C*_{F} bezogen auf das Gesamtgewicht des Feeds;
i) Abziehen eines reichen Arbeitsmediums enthaltend Wasser, Wasserstoff und Lithiumhydroxid aus dem zweiten Kompartiment, wobei die Konzentration von Lithiumhydroxid in dem reichen Arbeitsmedium *C*_{M1} bezogen auf das Gesamtgewicht des reichen Arbeitsmediums größer ist als die Konzentration von Lithiumhydroxid in dem armen Arbeitsmedium *C*_{M0} bezogen auf das Gesamtgewicht des armen Arbeitsmediums, und wobei die Konzentration von Lithiumhydroxid in dem reichen Arbeitsmedium *C*_{M1} bezogen auf das Gesamtgewicht des reichen Arbeitsmediums größer ist als die Löslichkeit von Lithiumhydroxid in Wasser bei einer Temperatur *T*_{M1}, wobei die Temperatur *T*_{M1} die Temperatur des reichen Arbeitsmediums zum Zeitpunkt seines Abziehens aus dem zweiten Kompartiment bezeichnet.

2. Verfahren nach Anspruch 1, **dadurch gekennzeichnet, dass** reiche Arbeitsmedium zum Zeitpunkt seines Abziehens aus dem zweiten Kompartiment Lithiumhydroxid als Festkörper enthält.

3. Verfahren nach Anspruch 1 oder 2, **dadurch gekennzeichnet, dass** die Temperatur *T*_{M1} des reichen Arbeitsmediums zum Zeitpunkt seines Abziehens aus dem zweiten Kompartiment zwischen 20°C und 60°C beträgt.

4. Verfahren nach Anspruch 3, **dadurch gekennzeichnet, dass** die Konzentration von Lithium-hydroxid in dem reichen Arbeitsmedium *C*_{M1} bezogen auf das Gesamtgewicht des reichen Arbeitsmediums größer ist als 0.1276 kg/kg.

5. Verfahren nach einem der Ansprüche 1 bis 4, **dadurch gekennzeichnet, dass** die Konzentration von Lithiumhydroxid in dem armen Arbeitsmedium *C*_{M0} bezogen auf das Gesamtgewicht des armen Arbeitsmediums weniger als 12.8 Gew.-% beträgt.

6. Verfahren nach einem der Ansprüche 1 bis 4, **dadurch gekennzeichnet**, der Feed Anionen enthält, welche ausgewählt sind aus der Gruppe bestehend aus Sulfat, Carbonat, Hydroxid, Chlorid.

7. Verfahren nach einem der Ansprüche 1 bis 6, **dadurch gekennzeichnet, dass** der Feed Verunreinigungen in Gestalt von Verbindungen von Elementen enthält, welche ausgewählt sind aus der Gruppe bestehend aus B, Na, Mg, Al, Si, K, Ca, Mn, Fe, Co, Ni, Cu, C.

8. Verfahren nach einem der vorhergehenden Ansprüche, wobei das in der Membran enthaltene anorganische Material eine nach der hier beschriebenen Methode "Impedanz Spektroskopie" gemessene Leitfähigkeit für Li-Ionen besitzt, die bei einer Temperatur von 23°C mindestens 1*10⁻⁵ S/m oder mindestens 5*10⁻⁵ S/m oder mindestens 10*10⁻⁵ S/m und maximal 100*10⁻⁵ S/m beträgt.

9. Verfahren nach Anspruch 8, **dadurch gekennzeichnet, dass** es sich bei dem anorganischen Material um eine Verbindung der folgenden Stöchiometrie (LATP) handelt:
Li₁₊ₓAlₓTi₂₋ₓ(PO₄)₃
worin gilt: 0.1≤x≤0.3, wobei bevorzugt gilt x=0.3.

10. Verfahren nach Anspruch 8, **dadurch gekennzeichnet, dass** es sich bei dem anorganischen Material um eine Verbindung der folgenden Stöchiometrie (LATSP) handelt:
Li_{1+x+y}AlₓTi₂₋ₓSi_{y}P_{3-y}O₁₂
worin gilt: 0.1≤x≤0.3 und 0.2≤y≤0.4.

11. Verfahren nach Anspruch 8, **dadurch gekennzeichnet, dass** es sich bei dem anorganischen Material um eine Verbindung der folgenden Stöchiometrie (LAGTSP) handelt:
Li_{1+x+y}AlₓT₂₋ₓSi_{y}P_{3-y}O₁₂ * nGeO₂
worin gilt: 0≤x≤1 und 0≤y≤1 und 0≤n≤1

12. Verfahren nach Anspruch 8, **dadurch gekennzeichnet, dass** es sich bei dem anorganischen Material um eine Verbindung der folgenden Stöchiometrie (LAGTP) handelt:
Li_{1.4}Al_{0.4}(Ge₁₋ₓTiₓ)_{1.6} (PO₄)₃
worin gilt: 0≤x≤1.

13. Verfahren nach Anspruch 8, **dadurch gekennzeichnet, dass** es sich bei dem anorganischen Material um eine Verbindung der folgenden Stöchiometrie (LAGP) handelt:
Li₁₊ₓAlₓGe₂₋ₓ (PO₄)₃
worin gilt: x=0 oder x=0.2 oder x=0.4.

14. Verfahren nach Anspruch 8, **dadurch gekennzeichnet, dass** es sich bei dem anorganischen Material um eine Verbindung der folgenden Stöchiometrie (LLTO) handelt:
Li₃ₓLa_{(2/3)-x□(1/3)-2x}TiO₃
worin gilt: 0≤x≤0.16.

15. Verfahren nach einem der vorhergehenden Ansprüche mit den zusätzlichen Schritten:
k) Bereitstellen eines Trennapparates;
l) Abtrennen von Lithiumhydroxid aus dem reichen Arbeitsmedium mit Hilfe des Trennapparates.

16. Verfahren nach Anspruch 15, **dadurch gekennzeichnet, dass** in dem Schritt
l) Abtrennen von Lithiumhydroxid aus dem reichen Arbeitsmedium mit Hilfe des Trennapparates ein Produkt erhalten wird, welches die folgende Zusammensetzung aufweist:
| | |
|---|---|
| Lithiumhydroxid: | >56.5 Gew.-% |
| Wasser: | <43.5 Gew.-% |
| Kohlendioxid: | <0.35 Gew.-% |
| Schwefeldioxid: | <0.01 Gew.-% |
| Chlor: | <0.002 Gew.-% |
| Calcium: | <15 Gew.-ppm |
| Eisen: | <5 Gew.-ppm |
| Natrium: | <20 Gew.-ppm |
| Aluminium: | <10 Gew.-ppm |
| Chrom: | <5 Gew.-ppm |
| Kalium: | <10 Gew.-ppm |
| Kupfer: | <5 Gew.-ppm |
| Nickel: | <10 Gew.-ppm |
| Silicium: | <30 Gew.-ppm |
| Zink: | <10 Gew.-ppm |
| Sonstige Stoffe: | <10 Gew.-% |
wobei die Gewichtsanteile sich zu 100 % ergänzen, und bezogen sind auf das Gesamtgewicht des Produkts.

17. Verfahren nach Anspruch 15 oder 16, **dadurch gekennzeichnet, dass** bei dem Schritt
l) Abtrennen von Lithiumhydroxid aus dem reichen Arbeitsmedium mit Hilfe des Trennapparates;
das arme Arbeitsmedium erhalten wird, dergestalt, dass der Schritt
b) Bereitstellen eines armen Arbeitsmediums enthaltend Wasser und darin gelöst Lithiumhydroxid, wobei die Konzentration von Lithiumhydroxid in dem armen Arbeitsmedium *C*_{M0} bezogen auf das Gesamtgewicht des armen Arbeitsmediums mindestens 50 Gew.-ppm beträgt;
mit Hilfe des Trennapparates erfolgt.

18. Verfahren nach Anspruch 15 oder 16 oder 17, **dadurch gekennzeichnet, dass** die elektrochemische Zelle und der Trennapparat an demselben Ort bereitgestellt werden.

19. Verfahren nach Anspruch 18, **dadurch gekennzeichnet, dass** zumindest die Verfahrensschritte
i) Abziehen eines reichen Arbeitsmediums enthaltend Wasser, Wasserstoff und Lithiumhydroxid aus dem zweiten Kompartiment;
und
l) Abtrennen von Lithiumhydroxid aus dem reichen Arbeitsmedium mit Hilfe des Trennapparates;
kontinuierlich erfolgen.

20. Verfahren nach einem der Ansprüche 15 bis 19, **dadurch gekennzeichnet, dass** es sich bei dem Trennappart um einen Festkörperabscheider handelt.

21. Verfahren nach Anspruch 20, **dadurch gekennzeichnet, dass** der Trennappart ausgewählt ist aus der Gruppe bestehend aus den folgenden Festkörperabscheidern: Filter, Hydrozyklon, Absetzabscheider.
